# EUROPEAN PATENT SPECIFICATION

(11) **EP 4 538 676 B1**
(45) Date of publication and mention of the grant of the patent: **29.04.2026**
(21) Application number: 23215081.3
(22) Date of filing: 07.12.2023
(51) Int. Cl.: G01N 3/42

(54) **METHOD FOR DETERMINING HYDROGEN CONTENT AND MICROHARDNESS**
VERFAHREN ZUR BESTIMMUNG VON WASSERSTOFFGEHALT UND MIKROHÄRTE
PROCÉDÉ POUR DÉTERMINER LA TENEUR EN HYDROGÈNE ET LA MICRODURETÉ

(30) Priority: 09.10.2023 PL 44632823
(43) Date of publication of application: 16.04.2025
(73) Proprietor: Akademia Gorniczo-Hutnicza im. Stanislawa Staszica w Krakowie, 30-059 Krakow (PL)
(72) Inventor: Wojciechowski, Krzysztof, 32-082 Wieckowice (PL); Sajdak, Maja, 36-001 Trzebownisko (PL)
(74) Representative: Wlasienko, Jozef

(56) References cited:
- EP-A1- 0 052 857
- WO-A1-92/08119
- US-A1- 2015 033 835
- TERMSUKSAWAD P ET AL: "Measurement of hydrogen in alloys by magnetic and electronic techniques", JOURNAL OF ALLOYS AND COMPOUNDS, ELSEVIER SEQUOIA, LAUSANNE, CH, vol. 373, no. 1-2, 30 June 2004 (2004-06-30), pages 86 - 95, XP004507778, ISSN: 0925-8388

## Description

### Field of the invention

An object of the invention is a measuring system for determining hydrogen content and microhardness, as well as a method for determining hydrogen content and microhardness in metallic material sample using thermoelectric indenter with a suitable measuring system. In particular, the invention provides quick and easy control of hydrogen content and microhardness of hydrogenated materials, in particular for quality control of products.

The invention belongs to the field of material property testing and quality control of products, in particular subjected to hydrogenation.

### Background to the invention

During various technological processes, in particular electrochemical treatment of metals, there is a phenomenon of the release of gaseous hydrogen, which can penetrate the structure of metals. Hydrogen dissolution processes in metals also occur in industrial plants where hydrogen is transported and stored.

The effect of hydrogen on metals is accompanied by a detrimental effect, which is referred to as hydrogen embrittlement. This effect results in a significant deterioration of the mechanical properties of metal installations, components and parts. Controlling the state of hydrogenation by testing the content of this element in materials can reduce the occurrence of hydrogen embrittlement.

Hydrogen is a difficult element to detect directly in materials. The most commonly used direct chemical methods involve extracting hydrogen from a sample and then measuring its amount with gas or conductivity detectors. One such method is thermal desorption spectroscopy (TDS). TDS can be used to measure low levels of hydrogen (at about 1 ppm wt.) and to characterize the binding energy of "hydrogen traps". Direct methods are not commonly used in industry due to the destruction of the component under test and the lengthy analysis process that requires special conditions, such as ultra-high vacuum.

Direct instrumental methods usually involve radiation techniques such as neutron radiography (NR) and neutron tomography (NT). These methods allow the quantitative measurement of hydrogen for dynamic processes and provide sensitivity in the ppm range and spatial resolution in the nanometer range. A method for high-resolution hydrogen detection has been adapted using atomic force microscopy (AFM) and scanning Kelvin probe force microscopy (SKPFM). Using these methods, hydrogen permeation through polycrystalline samples can be studied with high lateral resolution down to the grain boundaries. As with direct methods, testing requires the special preparation of samples, which can be expensive and often involves the destruction of the component.

Indirect methods are usually used to make non-destructive, rapid measurements of the hydrogen content of components manufactured on the production line. These involve measuring a physical quantity correlated with hydrogen content, for example changes in electrical parameters, reflectance, magnetic susceptibility, etc. Indirect methods are often used in situations where measurements of the average hydrogen concentration are problematic due to the limited number of samples, such as thin films. Indirect methods allow a coarse determination of the amount of hydrogen and usually require calibration using direct methods.

### State of the art description

Patent publication WO2007108261A1 is known in the state of the art, which describes a hydrogen detector based on the effect of changing the reflectance of radiation in contact between the surface of a material and gaseous hydrogen. This detector identifies gaseous hydrogen leaks by analyzing the output signal from a photosensor that is sensitive to the intensity of received light.

Furthermore, patent publication KR20070013385A is known in the state of the art, which describes a method of measuring the amount of hydrogen in the hydrogen storage alloy for a fuel cell vehicle by measuring the Seebeck coefficient. The value of the Seebeck coefficient decreases proportionally as the amount of stored hydrogen increases. The method of measuring the amount of hydrogen involves measuring the thermopower in the powdered hydrogen storage alloy and calculating the amount of hydrogen actually stored in the alloy based on the determined calibration relationship between the Seebeck coefficient and the amount of hydrogen.

For non-destructive measurements in industrial environments, it may be advantageous to combine an indirect method of measuring hydrogen content based, for example, on electrical parameter measurements with simultaneous measurement of microhardness. Simultaneously measuring the hardness and hydrogen content of a material provides a more meaningful assessment of its degree of hydrogenation. Standard hardness measurement involves pressing a diamond indenter into the test material with a set force and then testing the indentation geometry under a microscope. This is a laboratory method used on suitably prepared samples. Portable hardness testers have been developed for non-destructive hardness measurements, in which hardness assessment is performed indirectly by measuring other physical properties (e.g. electrical resistance). As with hydrogen analyzers, portable hardness testers are particularly suitable for non-destructive hardness measurements in industrial environments.

For example, patent publication WO9507454A1 describes an indenter for testing the hardness of metals, alloys and conductive materials. The indenter is made of an insulator coated with a conductive film, the conductivity of which decreases towards the tip apex. A cone-shaped tip with an angle of no more than 110° increases precision compared to indenters built to a standard Vickers or Rockwell 120° cone. Hardness is determined by measuring the electrical resistance between the indentation tip and the material sample under test when a specific load is applied.

A method of measuring the hardness of a material by measuring the electrical contact resistance between a hard semiconductor indenter and the material, which avoids the need to know the electrical resistivity of the material, is described in patent publication WO8606833A1. The repeatability of the electrical contact resistance measurement is greatly enhanced by applying an electrical discharge across the contact between the material and the indenter prior to making this measurement. By testing the electrical contact resistance of an indenter made of a hard, electrically conductive material, it was found that effective hardness measurements can be made using a hard semiconductor material, such as as silicon carbide. Silicon carbide is second only to diamond on the Mohs hardness scale, and because it is a semiconductor, its electrical resistivity can be much higher than for any metal, yet not so high that resistance measurements are hampered. In addition, it is advantageous for the indenter's electrical conductivity to be almost independent of temperature and its geometry to be the same as that of a Vickers cone, to enable its use in conventional hardness testing machines.

In Termsuksawad, P., et al., "Measurement of hydrogen in alloys by magnetic and electronic techniques", Journal of alloys and compounds 373, no 1-2 (2004), 86-95, magnetization and thermoelectric (Seebeck) coefficient were measured as functions of hydrogen content in powdered type alloys.

The technical problem solved by the invention is the development of a new method for determining hydrogen content and microhardness of metallic material sample that allows fast measurements of the hydrogen content on the surface of metallic components, particularly steel, to be carried out by an indirect method using measurements of the thermoelectric effect (using the Seebeck coefficient). Carried out together with the thermopower measurement, the measurement of the contact resistance of the indenter with the material allows the determination of the imprint depth d, the determination of the area of analysis of the hydrogen content and the simultaneous determination of the microhardness of the material, which can be correlated with the hydrogen content. Compared to other methods, hydrogen content measurements using the indenter are fast and cause minimal damage to the sample surface.

### Disclosure of the invention

The object of the present invention is a method for determining hydrogen content and microhardness of metallic material sample, according to claim 1.

The essential elements of the invention is a method for measuring hydrogen content based on indirect measurement of the thermoelectric effect and the measuring system that allows direct measurement of the thermopower and contact resistance and indirect determination of the penetration depth of the indenter and the microhardness of the test sample.

Compared to known methods, the invention provides a quick and easy control of the hydrogen content and microhardness of hydrogenated materials, particularly for product quality control. Measurements are performed with minimal sample preparation of the test material and low cost.

The compact solution of the indenter, not part of the claimed invention, allows it to be implemented in laboratory equipment as well as portable meters intended for non-destructive testing of finished products and components. The device is suitable for the measurement of various types of conductive materials, including metals and their alloys, and semiconductors in solid or film form and coatings. Testing can be carried out on the finished construction component. Compared to other methods, hydrogen content measurements performed with the indenter are fast and do little damage to the surface of the component under test. They can be considered non-destructive in many cases.

### Brief description of the drawing

The object of the invention is made apparent in an embodiment, with reference to the accompanying drawings, in which:
- Fig. 1.: shows a schematic of said thermoelectric indenter with the measuring system for determining hydrogen content which is not part of the present invention, where the following references are present:
1. Sample
2. Vickers's indenter
3. Spring
4. Pressure pin
5. Sleeve
6. Microheater
7. Indenter temperature sensor
8. Sample temperature sensor
9. Reference electrode
10. Measuring electrode
11. Temperature controller.
- Fig. 2.: shows dependence of Seebeck coefficient on hydrogen content for 4340 steel according to the embodiment.
- Fig. 3: shows calibration curve of hydrogen content in AISI 4340 steel vs. Seebeck coefficient.
- Fig. 4: shows changes in hydrogen content of AISI 4340 steel at different hydrogenation times.

The present invention is not limited to the detailed working example described below.

### Example 1

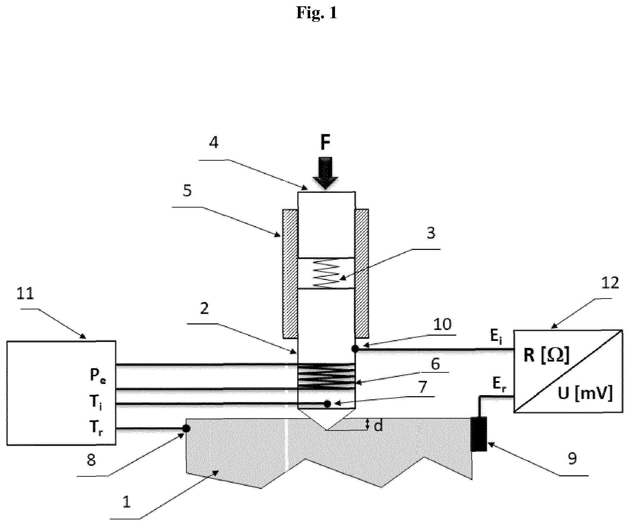

In the present embodiment, a thermoelectric indenter, which is not part of the present invention, is used to illustrate the implementation of the method according to the present invention. The thermoelectric indenter with an appropriate measuring system is used in the method for determining the hydrogen content and microhardness of a metal sample. As shown in Fig. 1, this may be the indenter 2, preferably of Vickers hardness indenter geometry, which penetrates into the test sample 1 to a depth of d. The indenter 2 is preferably made of carbides of d-block elements of periodic table of elements (e.g. TiC, WC) with a low absolute Seebeck coefficient <10 µV/K and high thermal and electrical conductivity. The indenter 2, mounted in a sleeve 5, is pressed against the sample 1 by given force F through a pressure pin 4 and a spring 3. The indenter 2 is heated by a micro-heater 6. The temperature Tᵢ of the indenter is controlled relative to temperature Tᵣ of the test sample by temperature controller 11. The temperature controller determines with the help of sensors 7 and 8 the temperature difference ΔT=Tᵣ-Tᵢ supplying the micro-heater 6 with suitable electrical power Pₑ. The electronic measuring system 12 measuring voltage U and electrical resistance R is connected to a reference electrode 9 and a measuring electrode 10. The reference electrode 9 is attached to the test sample 1 and has reference potential Eᵣ. The measuring electrode 10 is connected to the indenter 2 and has an electric potential Eᵢ. The electronic measuring system 12 measures potential difference U=Eᵢ-Eᵣ between these electrodes 9 and 10 and electrical resistance R, preferably by an alternating current method.

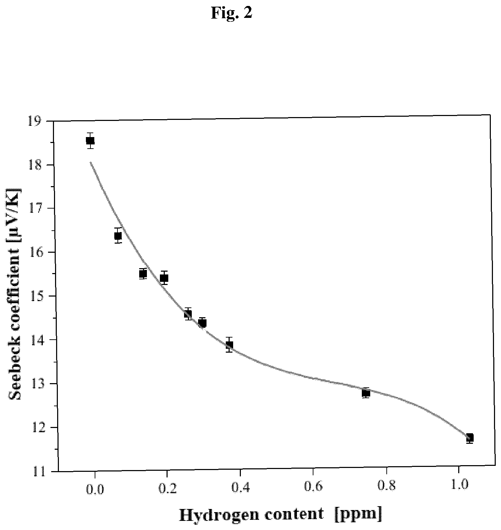

Based on the values of potential difference U, temperature difference ΔT and resistance R, the Seebeck coefficient α is determined. Based on the known dependence of the value of the Seebeck coefficient on the hydrogen content (see, Fig. 2) for the test material, the hydrogen content C_{H} in sample 1 is determined.

Based on the values of force F and electrical resistance R and the known calibration relationship HV=f(F,R) for the test material, the Vickers hardness HV of sample 1 is additionally determined.

### Example 2

The spontaneous dehydrogenation process in steel construction components occurs even at room temperature. Under such conditions, known methods of measuring hydrogen content cannot be easily used to study this phenomenon under industrial environments, because they lead to the destruction of the test component or cause changes in hydrogen concentration when preparing samples for testing. The thermoelectric indenter, mentioned above in Example 1, can be used to control the hydrogen content of steel products immediately after the manufacturing process.

According to the invention, thermoelectric measurements of hydrogen content were used to study the kinetics of spontaneous dehydrogenation of AISI 4340 steel samples previously hydrogenated by an electrochemical process.

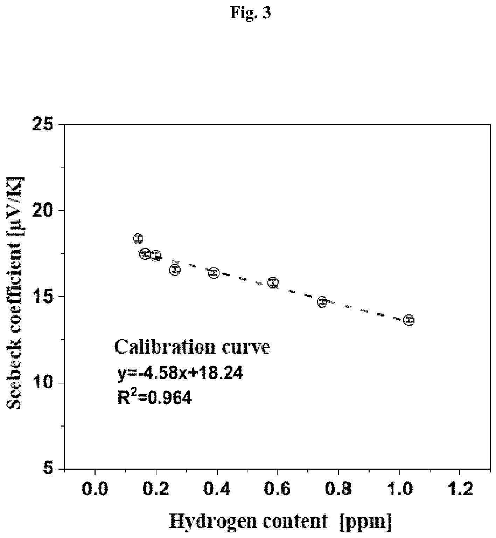

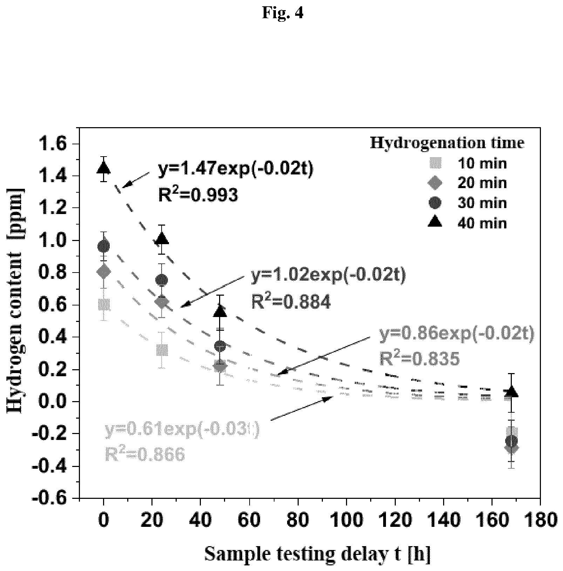

For this purpose:
- A series of 4 samples of 8.5 mm diameter, 9 mm high 4340 steel were prepared and subjected to surface activation by sandblasting and immersion for 30 sec in a solution of 10 g/l HCl.
- The samples were electrochemically hydrogenated in a solution of 150 g/l NaOH. A current density of 9A/dm² was used for the first minute of the process, followed by 6A/dm². The process was carried out at room temperature. The steel sample served as the cathode, while the nickel plate served as the anode. The hydrogenation process of the 4 samples was carried out at times of: 10, 20, 30 and 40 minutes.
- Thermoelectric probe calibration was performed on 8 reference samples of AISI 4340 steel containing hydrogen content in a range of 0 to 1 ppm. The calibration curve is shown in Fig. 3.
- The hydrogen content of samples subjected to spontaneous dehydrogenation was measured using a calibrated device. Hydrogen content measurements were made after times of 0, 24, 48 and 168 h.
- Relationships of hydrogen content-measurement time elapsed since hydrogenation were plotted (Fig. 4). It was found that the obtained experimental data can be described by kinetic equations for first-order reactions.

The results obtained confirm the occurrence of spontaneous hydrogen diffusion at room temperature in time. Measurements were performed in a short period of a few minutes, and the performed hydrogen content tests did not cause damage to the test material. The performed measurements allow predicting changes in the hydrogen content of products made of AISI 4340 steel during storage.

## Claims

1. A method for determining a hydrogen content and a microhardness in a sample of metallic material, using a thermoelectric indenter with a suitable measuring system, the method consisting in the steps:
- the values of the potential difference U, the temperature difference ΔT and the electrical resistance R in a sample are measured and the Seebeck coefficient α is determined for the test sample, then
- the hydrogen content C_{H} in the sample is determined on the basis of the known dependence of the Seebeck coefficient value on the hydrogen content for the test material, **characterized in that** the method consists of the additional steps of:
- the Vickers hardness HV of the sample is additionally determined for the test material on the basis of the given value of the force F and the measured electrical resistance R, as well as the known calibration relationship HV=f(F,R),
wherein measurement R of the contact between said thermoelectric indenter and the sample material allows to determine the depth of intendation d, determine an area of analysis of the hydrogen content and the same time determine the microhardness of the material, which can be correlated with the hydrogen content.

## Patentansprüche

1. Verfahren zur Bestimmung des Wasserstoffgehalts und der Mikrohärte in einer Probe aus metallischem Material unter Verwendung eines thermoelektrischen Eindringkörpers mit einem geeigneten Messsystem, **dadurch gekennzeichnet, dass** das Verfahren aus folgenden Schritten besteht:
- Die Werte der Potentialdifferenz U, der Temperaturdifferenz ΔT und des elektrischen Widerstands R in einer Probe werden gemessen und der Seebeck-Koeffizient α wird für die Testprobe bestimmt, dann
- der Wasserstoffgehalt CH in der Probe auf der Grundlage der bekannten Abhängigkeit des Seebeck-Koeffizientenwertes vom Wasserstoffgehalt für das Testmaterial bestimmt wird und
- die Vickers-Härte HV der Probe zusätzlich für das Testmaterial auf der Grundlage des gegebenen Wertes der Kraft F und des gemessenen elektrischen Widerstands R sowie der bekannten Kalibrierungsbeziehung HV=f(F,R), wobei die Messung R des Kontakts zwischen dem thermoelektrischen Eindringkörper und dem Probenmaterial es ermöglicht, die Eindringtiefe d zu bestimmen, einen Analysebereich für den Wasserstoffgehalt zu bestimmen und gleichzeitig die Mikrohärte des Materials zu bestimmen, die mit dem Wasserstoffgehalt korreliert werden kann.

## Revendications

1. Procédé pour déterminer la teneur en hydrogène et la microdureté d'un échantillon de matériau métallique, à l'aide d'un pénétrateur thermoélectrique équipé d'un système de mesure approprié, **caractérisé en ce qu'il** comprend les étapes suivantes :
- on mesure les valeurs de la différence de potentiel U, de la différence de température ΔT et de la résistance électrique R dans un échantillon et on détermine le coefficient Seebeck α pour l'échantillon d'essai, puis
- la teneur en hydrogène CH dans l'échantillon est déterminée sur la base de la dépendance connue de la valeur du coefficient Seebeck par rapport à la teneur en hydrogène pour le matériau d'essai , et
- la dureté Vickers HV de l'échantillon est en outre déterminée pour le matériau d'essai sur la base de la valeur donnée de la force F et de la résistance électrique mesurée R, ainsi que de la relation d'étalonnage connue HV=f(F,R), la mesure R du contact entre ledit pénétrateur thermoélectrique et le matériau de l'échantillon permettant de déterminer la profondeur d'indentation d, de déterminer une zone d'analyse de la teneur en hydrogène et, en même temps, de déterminer la microdureté du matériau, qui peut être corrélée à la teneur en hydrogène.
